# EUROPÄISCHE PATENTSCHRIFT

(11) **EP 4 652 061 B1**
(45) Veröffentlichungstag und Bekanntmachung des Hinweises auf die Patenterteilung: **16.09.2026**
(21) Anmeldenummer: 24710652.9
(22) Anmeldetag: 27.02.2024
(51) Int. Cl.: B60L 3/00, B60L 3/04, B60L 15/00, B60L 58/21, H01M 10/42, H02H 3/08, H02H 7/18, H02H 7/26, H02J 7/00, H02M 1/088, H02M 1/32, H02M 3/158, H02M 7/5387

(54) **KURZSCHLUSSSCHUTZ MIT HALBLEITERSCHALTER**
SHORT CIRCUIT PROTECTION WITH SEMICONDUCTOR SWITCH
PROTECTION DE COURT CIRCUIT AVEC COMMUTATEUR À SEMI-CONDUCTEUR

(30) Priorität: 03.03.2023 DE 102023201951
(43) Veröffentlichungstag der Anmeldung: 26.11.2025
(73) Patentinhaber: Siemens Mobility GmbH, 80997 München (DE)
(72) Erfinder: DITTRICH, Maik, 91052 Erlangen (DE)
(74) Vertreter: Siemens Patent Attorneys
(86) Internationale Anmeldenummer: PCT/EP2024/054909
(87) Internationale Veröffentlichungsnummer: WO 2024/184126

(56) Entgegenhaltungen:
- WO-A1-2022/018130
- WO-A1-2022/018130
- WO-A1-2022/211269
- WO-A1-2022/211269
- WO-A2-2022/272007
- WO-A2-2022/272007
- US-A1- 2018 366 791
- US-A1- 2018 366 791
- US-A1- 2021 143 630
- US-A1- 2021 143 630
- US-B2- 8 710 800
- US-B2- 8 710 800

## Beschreibung

Die Erfindung betrifft eine Schutzschaltung für einen Traktionsakkumulator. Weiterhin betrifft die Erfindung eine Stromversorgungseinrichtung. Außerdem betrifft die Erfindung ein elektrisch angetriebenes Fahrzeug. Zudem bezieht sich die Erfindung auch auf ein Verfahren zum Herstellen einer Schutzschaltung für einen Traktionsakkumulator.

Akkumulatoren zum Betrieb von Fahrzeugen, im Folgenden auch als Traktionsbatterien oder Traktionsakkumulatoren bezeichnet, müssen von Zeit zu Zeit elektrisch aufgeladen werden. Hierzu umfasst ein Fahrzeug, beispielsweise ein Schienenfahrzeug, zusätzlich Leistungselektronik. Zum Beispiel wird bei einem Schienenfahrzeug herkömmlich ein DC/DC-Steller zwischen die Traktionsbatterie und einen sogenannten Traktionszwischenkreis geschaltet.

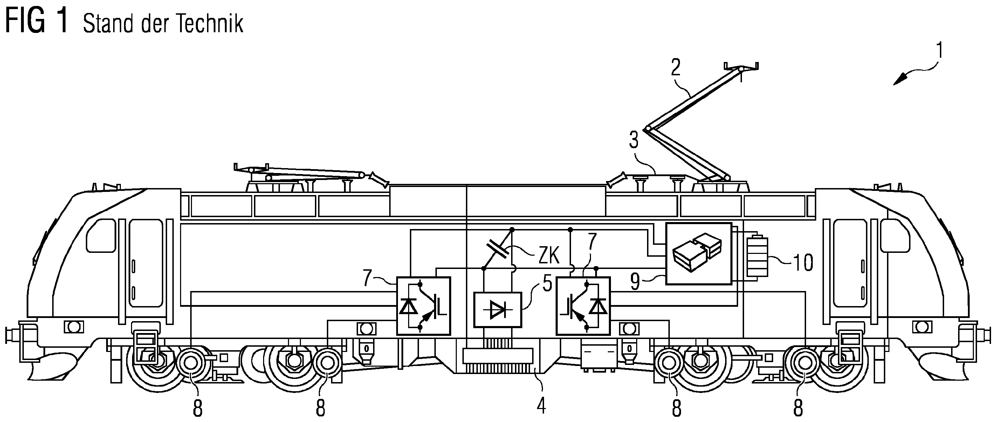

Ein elektrifiziertes Schienenfahrzeug mit Drehstromantrieb, wie es zum Beispiel in FIG 1 dargestellt ist, weist einen sogenannten Laststromrichter auf. Dieser Laststromrichter weist den bereits erwähnten Traktionszwischenkreis auf, der zwischen die Hochspannungsversorgung aus dem Bahnstromnetz und den Drehstromantrieb bzw. eine mit Drehstrom betriebene Traktionseinrichtung geschaltet ist. Ein solcher Traktionszwischenkreis weist üblicherweise eine Gleichspannung von 2 bis 4 kV auf. Dagegen ist die belastungsabhängige Klemmenspannung einer Traktionsbatterie gewöhnlich deutlich niedriger, typischerweise < 1kV. Zur Wandlung der elektrischen Spannung zwischen diesen unterschiedlichen Werten wird in der Regel der bereits erwähnte DC/DC-Steller verwendet. Weitere Bauelemente, die über den Traktionszwischenkreis indirekt mit der Traktionsbatterie in Kontakt sind, sind ein Vierquadrantensteller, mit dem der Netzstrom des Bahnstromnetzes, beispielsweise ein Wechselstrom, in Gleichstrom mit einer Gleichspannung des Traktionszwischenkreises verwandelt wird, und ein Antriebspulswechselrichter in Form eines Pulswechselrichters, der den Gleichstrom des Traktionszwischenkreises in mehrphasigen Wechselstrom der Fahrmotoren des Schienenfahrzeugs wandelt. Der Traktionszwischenkreis und alle diese Baugruppen, die mit dem Traktionszwischenkreis elektrisch verbunden sind, und die elektrischen Verbindungsleitungen dazwischen können beschädigt werden und von Kurzschlüssen betroffen sein.

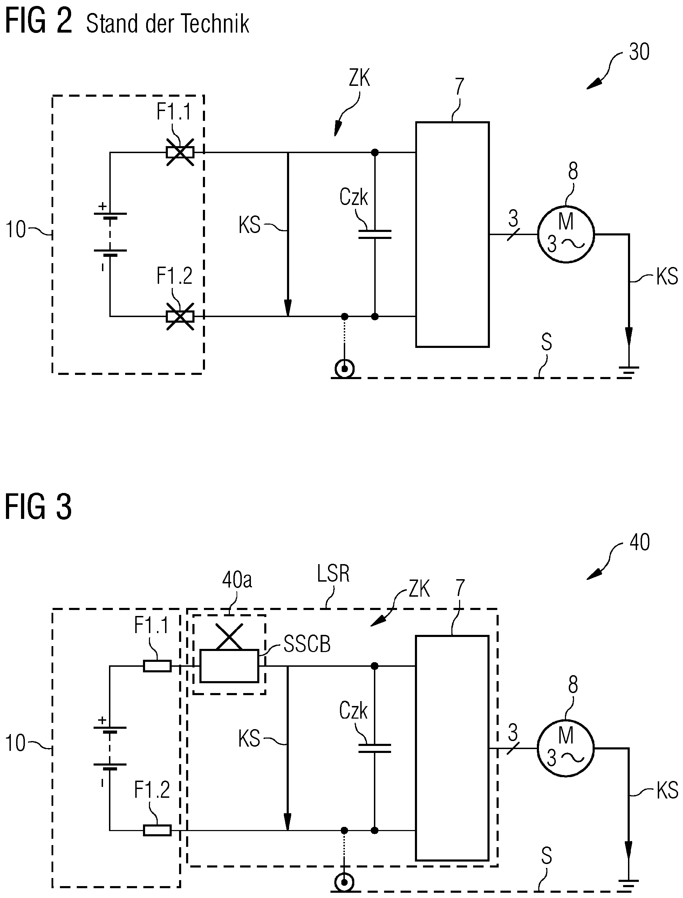

Fahrzeuge mit Traktionsbatterien umfassen daher häufig ein Überstromschutzelement, zum Beispiel eine sogenannte flinke Schmelzsicherung, zum Kurzschlussschutz der Traktionsbatterie. Derartige Schmelzsicherungen sind in FIG 2 gezeigt. Meist weist ein Schienenfahrzeug je Fahrmotorgruppe, d.h. je Drehgestell, nur einen zentralen Traktionszwischenkreis auf. Ein Kurzschluss in einem solchen zentralen Traktionszwischenkreis oder ein einfacher Erdschluss bei Fahrzeugen mit geerdetem Traktionszwischenkreis (entspricht einem Erdkurzschluss) führt daher zum gemeinsamen Auslösen aller Überstromschutzglieder bzw. Sicherungen für die betreffende Fahrmotorgruppe.

Solche nichtselektiven Schutzreaktionen infolge von Kurzschlüssen im Traktionszwischenkreis führen zu einer nicht mehr vernachlässigbaren Einbuße an Fahrzeug-Verfügbarkeit mit den verbundenen Nachteilen für den Fahrzeugbetreiber, wie zum Beispiel Betriebsunterbrechungen und Ersatzteil-Wechselkosten.

Herkömmliche mechanische DC-Schnellschalter für Sicherungen haben die folgenden Nachteile:
- sie schalten zu langsam, was bei geringen Induktivitätswerten in betreffenden Stromkreisen zu sehr hohen Abschaltüberströmen führt,
- DC-Schnellschalter sind groß und schwer.

Solche mechanischen Schnellschalter vom Typ UR10/ UR15 sind in https://www.secheron.com/wp-content/uploads/2021/10/- SG104136BDE_C04_Brochure_Circuit-breaker-DC_UR10-15_08.20.pdf beschrieben. UR10 und UR15 sind strombegrenzende, einpolige DC-Leistungsschalter mit natürlicher Kühlung, bi-direktional, mit Freiauslösung, elektromagnetischer Blaseinrichtung, elektrischen Steuerkreisen und direktem, unverzögertem Überstromauslöser.

Sicherungen, die auf dem Prinzip der pyrotechnischen Abtrennung basieren, sogenannte Pyro-Sicherungen, haben die folgenden Nachteile:
- ist eine solche Sicherung ausgelöst, ist sie nicht mehr rücksetzbar,
- der Einsatz von Sprengstoffen kann unabsehbare Folgeprobleme mit sich bringen.

Weiterhin werden herkömmlich SSCB-Einzelschalter (SSCB ist eine Abkürzung für Solid State Circuit Breaker = Halbleiter-Schutzschalter) für stationäre Industrie-Anwendungen, aber nicht für Traktionsakkumulatoren genutzt.

In US 8 710 800 B2 wird ein System zur Ausbalancierung eines Ladeprozesses einer Kraftfahrzeugbatterie mit einer Mehrzahl von Batteriezellen beschrieben. Das System wird auch zum Schutz vor Überladung einzelner Zelle der Kraftfahrzeugbatterie eingesetzt. Hierzu können einzelne Zellen, die bereits einen maximalen Ladezustand erreicht haben, bei dem Aufladeprozess überbrückt werden.

In US 2021 / 0 143 630 A1 wird eine Schutzeinrichtung mit einer Mehrzahl von separaten Halbleiter-Schutzschaltern zum Schutz von einer Mehrzahl von Batteriekomponenten für den Fall eines Defekts beschrieben.

In WO 2022 / 211 269 A1 wird ein Rack-Batteriemanagementsystem mit einer Batterieschutzeinrichtung mit Leistungsschutzschaltern beschrieben.

In US 2018 / 0 366 791 A1 wird ein Batteriespeicher mit einem Ausgangsterminal und einem Schalter zum Umschalten eines Ausgangszustands des Ausgangsterminals und weiteren Elementen zur Überwachung und zum Betrieb des Batteriespeichers beschrieben.

In WO 2022 / 018 130 wird ein Energieverteilsystem mit mehreren Mittelspannungs-Gleichstrom-Bussen beschrieben.

In WO 2022 / 272 007 A2 werden Hybrid-DC-Halbleiterschutzschalter mit einer Dämpfungsschaltung für eine erhöhte Busspannung beschrieben.

Es besteht also die Aufgabe, eine Schutzschaltung für eine batteriebasierte Stromversorgung eines Fahrzeugs, die die vorgenannten Probleme von batteriebasierten Stromversorgungseinrichtungen für Fahrzeuge mit herkömmlichen Schutzschaltern zumindest teilweise überwindet, bereitzustellen.

Diese Aufgabe wird durch eine Schutzschaltung für einen Traktionsakkumulator gemäß Patentanspruch 1, eine Stromversorgungseinrichtung gemäß Patentanspruch 10, ein elektrisch angetriebenes Fahrzeug gemäß Patentanspruch 11 und ein Verfahren zum Herstellen einer Schutzschaltung für einen Traktionsakkumulator gemäß Patentanspruch 12 gelöst.

Die erfindungsgemäße Schutzschaltung für einen Traktionsakkumulator weist einen halbeiterbasierten Schutzschalter auf. Der Traktionsakkumulator weist einen Pluspol und einen Minuspol auf. Der halbeiterbasierte Schutzschalter ist mit dem Pluspol des Traktionsakkumulators elektrisch verbunden. Es ist anzumerken, dass zwischen dem Pluspol des Traktionsakkumulators und dem Halbleiter-Schutzschalter bevorzugt noch einer herkömmliche Einmalsicherung, welche vorzugsweise eine Schmelzsicherung umfasst, angeordnet ist. Meist wird diese Einmalsicherung bereits dem Traktionsakkumulators zugerechnet bzw. ist Teil dieses Traktionsakkumulators. Der Traktionsakkumulator ist vorzugsweise ausgebildet für den Einsatz in einem Schienenfahrzeug. Als Halbleiter-Schutzschalter soll ein elektronischer Schutzschalter verstanden werden, dessen Schaltverhalten zur Vermeidung von Überströmen oder Überspannungen auf den spezifischen elektronischen Eigenschaften unterschiedlicher Halbleitermaterialien, insbesondere unterschiedlich dotierter Halbleitermaterialien beruht. Ein Halbleiter-Schutzschalter umfasst halbleiterbasierte Komponenten, vorzugsweise Dioden, insbesondere Invers-Dioden, und Transistoren.

Eine solche Schutzschaltung mit einem Halbleiter-Schutzschalter weist den Vorteil gegenüber einer Schutzschaltung mit einer Einmalsicherung auf, dass der halbleiterbasierte Schutzschalter mehrfach genutzt werden kann, ohne dass ein Austausch erfolgen muss. Insbesondere wenn der Schutzschalter in Kombination mit einer Einmalsicherung verwendet wird, d.h. in Serie mit einer solchen Einmalsicherung geschaltet ist, kann die Flexibilität und der geringe Wartungsbedarf des Halbleiter-Schutzschalters mit der hohen Sicherheit und Zuverlässigkeit der Einmalsicherung kombiniert werden. Insbesondere kann bei den meisten Ereignissen mit einem Auftreten eines Überstroms ein Aktivieren der Einmalsicherung und ein danach notwendiger Wartungsvorgang, der beispielsweise ein Austauschen der Einmalsicherung umfasst, vermieden werden. Weiterhin hat ein solcher Halbleiter-Schutzschalter den Vorteil einer hohen Abschaltgeschwindigkeit. Mithin wird bei einer Kombination des erfindungsgemäßen Halbleiter-Schutzschalters mit einer Einmalsicherung vorteilhaft ein "Durchbrennen" der Einmalsicherung, auch wenn als Einmalsicherung eine superflinke Schmelzsicherung genutzt wird, sogar bei niederinduktiven Kurzschlüssen vermieden, da der halbleiterbasierte Schutzschalter rechtzeitig schaltet, bevor die Einmalsicherung reagiert. Weiterhin kann durch das schnelle Schalten des Halbleiter-Schutzschalters auch eine Reduktion der Amplitude eines Kurzschlussstroms erreicht werden.

Die erfindungsgemäße Schutzschaltung bildet mit dem Traktionsakkumulator eine "quasi kurzschlussfeste Traktionsbatterie". Denn der halbleiterbasierte Schutzschalter kann vorzugsweise beliebig oft bei Kurschluss im Traktionszwischenkreis geschaltet und zurückgesetzt werden.

Zudem umfasst der halbleiterbasierte Schutzschalter einen Eingang und einen Ausgang und der Eingang des Halbleiter-Schutzschalters ist vorzugsweise mit dem Pluspol des Traktionsakkumulators elektrisch verbunden. Als "Eingang" soll der Anschluss des Halbleiter-Schutzschalters verstanden werden, in den ein elektrischer Gleichstrom hineinfließt, und als Ausgang soll der Anschluss des Halbleiter-Schutzschalters verstanden werden, aus dem ein elektrischer Gleichstrom hinausfließt. Wie später noch im Einzelnen erläutert, können Eingang und Ausgang des Halbleiter-Schutzschalters je nach konkreter Anforderung flexibel beschaltet werden. Weiterhin umfasst der halbleiterbasierte Schutzschalter eine Mehrzahl von parallelen Einzelschaltern. Vorteilhaft können eine Mehrzahl von Einzelschaltern im Vergleich zu einem einzelnen Schalter eine höhere elektrische Leistung bewältigen.

Die Einzelschalter sind auf einem gemeinsamen Kühlkörper angeordnet, was den Aufbau im Vergleich zu einer separaten Kühlung einzelner Komponenten vereinfacht.

Die erfindungsgemäße Stromversorgungseinrichtung weist einen Traktionsakkumulator mit einem Pluspol und einem Minuspol auf. Außerdem umfasst die erfindungsgemäße Stromversorgungseinrichtung eine erfindungsgemäße Schutzschaltung, deren Halbleiter-Schutzschalter mit dem Pluspol des Traktionsakkumulators elektrisch verbunden ist. Zudem umfasst die erfindungsgemäße Stromversorgungseinrichtung einen gleichstrombasierten Traktionszwischenkreis, der mit der Schutzschaltung und dem Traktionsakkumulator elektrisch verbunden ist. Außerdem umfasst die erfindungsgemäße Stromversorgungseinrichtung einen Antriebspulswechselrichter zur Transformation des Gleichstroms des Traktionszwischenkreises in dreiphasigen Wechselstrom zur Traktion. Vorzugsweise umfasst die erfindungsgemäße Stromversorgungseinrichtung einen sogenannten Traktions-Stromrichter, auch als Laststromrichter bezeichnet, welcher die erwähnten Komponenten, also insbesondere den gleichstrombasierten Traktionszwischenkreis und den Antriebspulswechselrichter sowie die Schutzschaltung aufweist.

Als Traktionsakkumulator ist ein wiederaufladbarer elektrischer Energiespeicher zu verstehen, der im Zusammenhang mit der erfindungsgemäßen Stromversorgungseinrichtung zur netzunabhängigen Versorgung von Traktionseinrichtungen, insbesondere der Fahrmotoren, und vorzugsweise der übrigen elektrischen Funktionseinheiten eines Schienenfahrzeugs eingesetzt wird. Ein solcher Traktionsakkumulator weist eine Vielzahl von parallel und seriell zusammengeschalteten Akkumulator-Zellen auf und ist als Hochvolt-Batterie und für die Bereitstellung von starken elektrischen Strömen ausgebildet, um eine ausreichende Leistung für die Traktion eines Fahrzeugs, insbesondere eines Schienenfahrzeugs, bereitstellen zu können. Elektrische Spannungen von 400 Volt bis 1000 Volt sind hier übliche Batterie-Nennspannungen, um schwere Fahrzeuge, wie zum Beispiel Schienenfahrzeuge antreiben zu können. Ein Traktionsakkumulator weist üblicherweise auch ein sogenanntes Batteriemanagementsystem auf, mit dem eine Überlastung einzelner Zellen bei der Energieentnahme vermieden wird. Die Traktionseinrichtungen umfassen Elektromotoren zum Antrieb der Antriebsräder des Schienenfahrzeugs. Zur Versorgung der Traktionseinrichtungen mit elektrischem Strom mit einer geeigneten elektrischen Spannung umfasst die Stromversorgungseinrichtung den erwähnten Traktionszwischenkreis. Ein solcher Traktionszwischenkreis ist in der Regel Teil des bereits erwähnten Laststromrichters, der eine Strom/Spannungswandlung zwischen dem Strom des Bahnstromnetzes oder dem Strom eines Traktionsakkumulators und den Aggregaten des Schienenfahrzeugs vornimmt.

Wie bereits erwähnt, ist der Traktionszwischenkreis zwischen die Hochspannungsversorgung aus dem Bahnstromnetz und den Drehstromantrieb bzw. eine mit Drehstrom betriebene Traktionseinrichtung geschaltet. Ein solcher Traktionszwischenkreis weist üblicherweise eine Gleichspannung von 2 bis 4 kV auf und liefert Gleichspannung. Zur Erzeugung der Gleichspannung umfasst die Leistungselektronik eines Schienenfahrzeugs auch einen sogenannten Vierquadrantensteller, der zwischen das Oberleitungsnetz und den Traktionszwischenkreis geschaltet ist und ebenfalls von dem Laststromrichter umfasst sein kann. Üblicherweise werden die Fahrmotoren der Traktionseinrichtungen mit Drehstrom betrieben, während der Bahnstrom aus dem Bahnstromnetz als Wechselstrom mit hoher elektrischer Spannung, beispielsweise 15kV oder 25kV, bezogen wird.

Der Antriebspulswechselrichter der erfindungsgemäßen Stromversorgungseinrichtung ist Teil des Laststromrichters und wandelt den Gleichstrom des Traktionszwischenkreises in den von einem Fahrmotor oder von mehreren Fahrmotoren der Traktionseinrichtungen benötigten Drehstrom um. Für die Übertragung des Drehstroms an die Fahrmotoren weist die erfindungsgemäße Stromversorgungseinrichtung vorzugsweise auch ein dreiphasiges Leitungssystem zur Versorgung eines oder mehrerer Fahrmotoren, welches mit dem Antriebspulswechselrichter elektrisch verbunden ist, auf. Der Antriebspulswechselrichter wandelt im Traktionsbetrieb die Gleichspannung des Zwischenkreises in eine Drehspannung variabler Amplitude, Frequenz und Phase für einen Fahrmotor, insbesondere eine Drehstrommaschine (Asynchron- oder Synchronmotor), und regelt diese hinsichtlich Drehzahl und Drehmoment.

Ein solcher Antriebspulswechselrichter kann jeweils für einen einzigen Fahrmotor ausgebildet sein. Bei dieser Variante, auch als Einzelachsspeisung bezeichnet, ist für jeden Fahrmotor ein separater Antriebspulswechselrichter vorgesehen. Diese Anordnung hat den Vorteil, dass einzelne Fahrmotoren bzw. deren Drehmoment und Rad-Schiene-Schlupf individuell gesteuert bzw. geregelt werden kann. In einer alternativen Variante kann auch ein gemeinsamer Antriebspulswechselrichter für mehrere Fahrmotoren oder für alle Fahrmotoren vorgesehen sein. Bei dieser Variante, auch als Gruppenspeisung bezeichnet, ist die Leistung des Antriebspulswechselrichters derart hoch gewählt, dass mehrere Fahrmotoren, vorzugsweise alle Fahrmotoren, parallel über einen gemeinsamen Antriebspulswechselrichter angesteuert werden. Entsprechend kann auch der Traktionszwischenkreis als gemeinsamer Traktionszwischenkreis für mehrere Fahrmotoren ausgebildet sein oder es können mehrere Traktionszwischenkreise jeweils für einzelne Fahrmotoren von dem Laststromrichter bzw. der erfindungsgemäßen Stromversorgungseinrichtung umfasst sein.

Die erfindungsgemäße Stromversorgungseinrichtung teilt die Vorteile der erfindungsgemäßen Schutzschaltung.

Das erfindungsgemäße elektrisch angetriebene Fahrzeug, vorzugsweise ein Schienenfahrzeug, weist eine Traktionseinrichtung sowie die erfindungsgemäße Stromversorgungseinrichtung zur Energieversorgung der Traktionseinrichtung auf. Das erfindungsgemäße elektrisch angetriebene Fahrzeug teilt die Vorteile der erfindungsgemäßen Stromversorgungseinrichtung.

Bei dem erfindungsgemäßen Verfahren zum Herstellen einer Schutzschaltung für einen Traktionsakkumulator, welche einen Pluspol und einen Minuspol aufweist, wird ein Halbleiter-Schutzschalter mit einem Eingang und einem Ausgang hergestellt. Weiterhin wird der Eingang des Halbleiter-Schutzschalters mit dem Pluspol des Traktionsakkumulators elektrisch verbunden. Außerdem erfolgt ein Ausbilden des Halbleiter-Schutzschalters mit einer Mehrzahl von parallelen Einzelschaltern.

Weiterhin werden die Einzelschalter auf einem gemeinsamen Kühlkörper angeordnet.

Vorteilhaft wird erfindungsgemäß somit eine Schutzschaltung für einen Traktionsakkumulator mit einer Sicherung gegen Überspannungen und zu hohe Ströme, welche beliebig oft nutzbar ist und einen geringeren Wartungsaufwand als herkömmliche Sicherungen erfordert, geschaffen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung der erfindungsgemäßen Schutzschaltung für einen Traktionsakkumulator umfasst der halbleiterbasierte Schutzschalter eine vorzugsweise schnelle Strommesseinheit. Vorteilhaft kann mit der Strommesseinheit ein starker Stromanstieg und insbesondere ein Kurzschlussstrom durch den Halbleiter-Schutzschalter gemessen werden. Ein schnelles Messen eines Stromanstiegs erlaubt ein schnelles Unterbrechen der Stromzufuhr, so dass eine gute Selektivität bezüglich einer superflinken Schmelzsicherung auch bei niederinduktiven Kurzschlüssen erreicht wird. "Schnell" soll in diesem Fall bedeuten, dass ein Stromanstieg rechtzeitig gemessen kann, bevor eine Einmalsicherung auf den Stromanstieg reagiert.

Besonders bevorzugt umfasst der halbleiterbasierte Schutzschalter eine Auswerte- und Ansteuerkomponente, mit der der Schutzschalter in Abhängigkeit von einem Messergebnis der Strommesseinheit in einen Sperrzustand oder einen Durchlasszustand geschaltet werden kann.

Ebenfalls bevorzugt erfolgt die Kühlung des Halbleiter-Schutzschalters mittels einer Kühlplatte. Die Kühlplatte ist dabei vorzugsweise als gemeinsame Kühlplatte für den Schutzschalter und die zusätzlichen Komponenten, insbesondere die Strommesseinheit und die Auswerte- und Ansteuerkomponente ausgelegt. Durch die gemeinsame Anordnung auf einer gemeinsamen Kühlplatte vereinfacht sich der Gesamtaufbau.

Weiterhin umfasst der Schutzschalter der erfindungsgemäßen Schutzschaltung bevorzugt eine Zusatz-Beschaltung. Die Zusatz-Beschaltung ist dazu eingerichtet, Spannungsspitzen zu begrenzen, und umfasst bevorzugt einen sogenannten Snubber-Kondensator oder einen Varistor. Vorteilhaft werden schnelle und starke Spannungsanstiege vermieden, wodurch die Haltbarkeit des Schutzschalters verbessert wird.

Außerdem lassen sich mit unterschiedlichen Einzelschaltern unterschiedliche Quellen und Verbraucher elektrisch verbinden. Diese Vorgehensweise ist vorteilhaft bei einem modularen Aufbau einer Stromversorgungseinrichtung mit einer Mehrzahl von parallel geschalteten Energiespeichern und/oder einer Mehrzahl von parallel geschalteten elektrischen Verbrauchern. Die parallel geschalteten Energiespeicher umfassen dabei bevorzugt parallel geschaltete Module, auch als Batteriemodule oder Akkumulatormodule bezeichnet. Die elektrischen Verbraucher können insbesondere parallelgeschaltete Traktionszwischenkreise und damit verbundene Traktionseinrichtungen, d.h. Antriebsmotoren, umfassen.

Mithin umfasst in einer bevorzugten Variante der erfindungsgemäßen Schutzschaltung der Traktionsakkumulator bevorzugt eine Mehrzahl von solchen parallelen (Batterie)-Modulen, von denen mindestens zwei parallele Module im Eingang und in Reihe mit unterschiedlichen Einzelschaltern des Halbleiter-Schutzschalters elektrisch verbunden sind. Ein Akkumulator umfasst üblicherweise ein sogenanntes Batteriepaket. Das Batteriepaket umfasst ein Batteriemanagementsystem mit dem der Betrieb des Akkumulators überwacht und geregelt wird. Das Batteriepaket weist meist eine Mehrzahl von Batteriemodulen, kurz auch als Module bezeichnet, auf, welche jeweils ein Gehäuse für eine Mehrzahl von Batteriezellen umfassen. Ein Batteriemodul umfasst eine seriell-parallele Kombination von Batteriezellen. Der modulare Aufbau ermöglicht eine flexible Skalierung eines Akkumulators, d.h. eine flexible Anpassung an eine gewünschte Energiespeicherkapazität. Da der Schutzschalter der erfindungsgemäßen Schutzschaltung bevorzugt eine Mehrzahl von parallelen Einzelschaltern umfasst, können diese einzeln mit unterschiedlichen Modulen des Traktionsakkumulators elektrisch verbunden werden, so dass einzelne Module selektiv geschützt werden können und gegebenenfalls nichtbetroffene Module auch bei einem Kurzschluss weiterbetrieben werden können.

Weist der Schutzschalter eine Mehrzahl von Einzelschaltern auf, so weisen bevorzugt die Einzelschalter jeweils eine solche Zusatzbeschaltung auf. Die Einzelschalter sind bevorzugt auf einem gemeinsamen Kühlkörper angeordnet, was den Aufbau im Vergleich zu einer separaten Kühlung einzelner Komponenten vereinfacht.

In einer Ausgestaltung des erfindungsgemäßen Traktionsakkumulators umfasst jeder der Halbleiter-Schutzschalter eine vorzugsweise schnelle Strommesseinheit. Vorteilhaft kann mit der Strommesseinheit individuell für jede Phase ein starker Stromanstieg und insbesondere ein Kurzschlussstrom durch den Einzelschalter gemessen werden. "Schnell" soll in diesem Fall bedeuten, dass die Strommesseinheit einen Stromanstieg rechtzeitig messen kann, bevor eine Einmalsicherung auf den Stromanstieg reagiert.

Besonders bevorzugt umfasst jeder der Einzelschalter eine Auswerte- und Ansteuerkomponente, mit der der jeweilige Einzelschalter in Abhängigkeit von einem Messergebnis der Strommesseinheit in einen Sperrzustand oder einen Durchlasszustand geschaltet werden kann. Vorteilhaft können einzelne Module des Traktionsakkumulators bzw. einzelne Phasen gezielt ausgeschaltet werden, wenn ein Kurzschluss detektiert wurde, und alle übrigen Module bzw. Phasen weiterbetrieben werden.

Ganz besonders bevorzugt ist jedes der parallelen Module im Eingang und in Reihe mit einem unterschiedlichen Einzelschalter des Halbleiter-Schutzschalters elektrisch verbunden. Vorteilhaft kann jedem der Module eine separate Phase zugeordnet werden. Defekte Module können vorteilhaft einzeln und gezielt angesteuert bzw. abgeschaltet werden, wobei die Funktion der übrigen Module erhalten bleibt.

In einer Variante der erfindungsgemäßen Schutzschaltung weist der Ausgang des Schutzschalters eine Mehrzahl von parallelen Anschlüssen bzw. Phasen auf, die jeweils mit mindestens einem der parallelen Einzelschalter elektrisch verbunden sind. Vorteilhaft lassen sich eine Mehrzahl von unterschiedlichen elektrischen Verbrauchern parallel mit Energie versorgen. Einzelne Schutzschalter können dabei unabhängigen Traktionszwischenkreisen und Verbrauchern zugeordnet sein.

Ebenfalls bevorzugt ist die Anzahl der Anschlüsse bzw. Phasen des Eingangs des Schutzschalters kleiner als die Anzahl der parallelen Einzelschalter. Bei dieser Variante werden die Phasen bzw. Anschlüsse von mehreren Einzelschaltern gebündelt, um einen oder mehrere Verbraucher mit besonders hohem Strom bzw. Energiebedarf zu versorgen. Es kann auch vorkommen, dass die Traktionsbatterie weniger Module aufweist als der Schutzschalter Einzelschalter. Auch dann kann es sinnvoll sein, eine kleinere Anzahl von Anschlüssen des Eingangs als die Anzahl der Einzelschalter vorzusehen.

Bevorzugt weist der Ausgang des Schutzschalters genau einen Anschluss bzw. eine Phase auf, welcher bzw. welche mit der Mehrzahl von parallelen Einzelschaltern elektrisch verbunden ist. Bei dieser Variante werden die Mehrzahl von Schutzschaltern anschaulich gesprochen auf eine einzige Phase gebündelt bzw. zusammengeführt, um einen einzigen Energieverbraucher mit besonders umfangreichem Energieverbrauch zu versorgen. Diese Variante kann bei einer Verschaltung eines Traktionsakkumulators mit genau einem einzigen Traktionszwischenkreis genutzt werden. Diese Variante ist dahingehend vorteilhaft, dass die von dem Schutzschalter benötigte Chipfläche bestmöglich ausgenutzt wird.

Bevorzugt weist der Eingang des Schutzschalters eine Anzahl von parallelen Anschlüssen auf und ist die Anzahl der Anschlüsse des Eingangs gleich der Anzahl der parallelen Einzelschalter des Halbleiter-Schutzschalters. Bei dieser Variante werden alle Einzelschalter über einen separaten Anschluss bzw. eine separate Phase angesteuert. In der Regel entspricht bei einer solchen Konfiguration die Anzahl der Module des Traktionsakkumulators der Anzahl der Einzelschalter. Vorteilhaft wird die gesamte Schaltkapazität des Schutzschalters bei maximaler Selektivität der Module genutzt.

In einer Variante der erfindungsgemäßen Schutzschaltung weist der Eingang des Halbleiter-Schutzschalters eine Anzahl von parallelen Anschlüssen auf und ist die Anzahl der Anschlüsse des Eingangs kleiner als die Anzahl der parallelen Einzelschalter des Halbleiter-Schutzschalters. Bei dieser Variante werden nicht alle Einzelschalter separat angesteuert. In der Regel ist bei einer solchen Beschaltung die Anzahl der Module des Traktionsakkumulators kleiner als die Anzahl der parallelen Einzelschalter des Halbleiter-Schutzschalters. Gegebenenfalls kann ein Modul mit mehreren Einzelschaltern verbunden sein, so dass die Stromkapazität pro Modul im Vergleich zur Verbindung eines einzelnen Moduls jeweils nur mit einem einzelnen Einzelschalter erhöht ist.

In einer speziellen Variante der erfindungsgemäßen Schutzschaltung für einen Traktionsakkumulator weist der Eingang genau einen Anschluss auf. Bei dieser Variante wird der halbleiterbasierte Schutzschalter wie ein einziger monolithischer Schalter mit maximaler Belastbarkeit bzw. Stromkapazität für eine Phase am Eingang angesteuert. Weist der Schutzschalter auch an seinem Ausgang nur eine Phase auf, auf die mehrere oder gar alle Einzelschalter zusammengeführt werden, so verhält er sich auch an seinem Ausgang wie ein einziger Schalter. Alternativ ist auch denkbar, die Strommenge am Ausgang auf mehrere Verbraucher zu verteilen, beispielsweise um mehrere Traktionszwischenkreise anzusteuern.

In einer Variante der erfindungsgemäßen Schutzschaltung für einen Traktionsakkumulator ist die Anzahl der Anschlüsse gleich der Anzahl der parallelen Module des Traktionsakkumulators. Bei dieser Variante sind sämtliche Anschlüsse mit Modulen des Traktionsakkumulators verbunden. Allerdings muss die Anzahl der Anschlüsse nicht der Anzahl der Einzelschalter entsprechen. Beispielsweise können mehrere Schalter parallel auf einen Anschluss geführt werden. Es können sich also mehrere unabhängige Schalter, die jeweils eine Mehrzahl von parallel kombinierten Schaltern umfassen, mit erhöhter Leistung ergeben. Im letzteren Fall ist die Anzahl der Anschlüsse kleiner als die Anzahl der parallelen Einzelschalter.

In einer besonders spezifischen Ausgestaltung der erfindungsgemäßen Schutzschaltung umfasst der Schutzschalter eine Mehrzahl von Einzelschaltern, vorzugsweise sechs parallele Einzelschalter. Jeder der vorzugsweise sechs Einzelschalter umfasst einen Transistor und eine parallel dazu geschaltete Invers-Diode. Weiterhin umfasst jeder Einzelschalter eine Zusatz-Beschaltung. Die Zusatz-Beschaltung ist dazu eingerichtet, Spannungsspitzen zu begrenzen, und ist bevorzugt durch einen sogenannten Snubber-Kondensator oder einen Varistor implementiert. Die Einzelschalter sind bevorzugt auf einem gemeinsamen Kühlkörper angeordnet. Weiterhin umfasst der Schutzschalter bevorzugt eine schnelle Strommesseinheit und eine Auswerte- und Ansteuerkomponente. Die Kühlung des Schutzschalters erfolgt bevorzugt mittels einer Kühlplatte. Um jede Phase einzeln abschalten zu können, wird der Strom jedes Einzelschalters ausgewertet und jeder Einzelschalter kann individuell angesteuert werden. Vorteilhaft wird durch die Zusatzbeschaltung ein Auftreten von möglicherweise schädlichen Spannungsspitzen verhindert. Die schnelle Strommesseinheit und eine geeignete Auswert- und Ansteuerkomponente ermöglichen eine besonders gut angepasste und schnelle Reaktion des Schutzschalters auf einen potentiell schädlichen Strom, bevor eine Einmalsicherung reagiert.

In einer Ausgestaltung des erfindungsgemäßen Verfahrens zum Herstellen einer Schutzschaltung für einen Traktionsakkumulator wird ein Halbleiter-Schutzschalter für einen Traktionsakkumulator, welcher eine Mehrzahl von Modulen, **d.h.** Energiespeichermodulen aufweist, vorzugsweise sechs Module, hergestellt. Der halbleiterbasierte Schutzschalter wird mit der Mehrzahl von parallel geschalteten Einzelschaltern und einem Eingang und einem Ausgang ausgebildet.

Anschließend werden die Module des Traktionsakkumulators pluspolseitig mit dem Eingang des Halbleiter-Schutzschalters elektrisch verbunden. Hierbei werden die Einzelschalter des Halbleiter-Schutzschalters jeweils mit den unterschiedlichen Modulen des Traktionsakkumulators elektrisch verbunden.

Weiterhin erfolgt eine Verbindung des Ausgangs des Halbleiter-Schutzschalters mit einem oder mehreren Traktionszwischenkreisen, wobei vorzugsweise alle Einzelschalter auf eine vorgegebene Anzahl von Traktionszwischenkreisen, vorzugsweise auf einen einzigen Traktionszwischenkreis zusammengeführt werden oder gegebenenfalls einzeln den Traktionszwischenkreisen zugeführt werden, wenn deren Anzahl der Anzahl der Einzelschalter entspricht. Vorteilhaft kann eine spezifische Konfiguration der Schutzschaltung in Abhängigkeit von einer konkreten Anwendung erfolgen.

Die Erfindung wird im Folgenden unter Hinweis auf die beigefügten Figuren anhand von Ausführungsbeispielen noch einmal näher erläutert. Es zeigen:
- FIG 1: eine schematische Darstellung eines Schienenfahrzeugs mit einer herkömmlichen Stromversorgungseinrichtung mit einem Traktionsakkumulator,
- FIG 2: eine schematische Darstellung einer herkömmlichen Stromversorgungsschaltung mit Stromsicherungen,
- FIG 3: eine schematische Darstellung einer Stromversorgungseinrichtung gemäß einem Ausführungsbeispiel der Erfindung,
- FIG 4: eine detaillierte Darstellung eines Schutzschalters der in FIG 3 bereits gezeigten Stromversorgungseinrichtung,
- FIG 5: eine Schutzschaltung mit einem Schutzschalter mit einer mehrphasigen Beschaltung an seinem Eingang und seinem Ausgang,
- FIG 6: eine Schutzschaltung mit einem Schutzschalter mit einer mehrphasigen Beschaltung seines Eingangs und einer einphasigen Beschaltung seines Ausgangs,
- FIG 7: eine Schutzschaltung mit einem Schutzschalter mit einer einphasigen Beschaltung seines Eingangs und seines Ausgangs,
- FIG 8: eine Schutzschaltung mit einem Schutzschalter mit einer zweiphasigen Beschaltung seines Eingangs und seines Ausgangs,
- FIG 9: eine vergrößerte Darstellung eines Einzelschalters eines Schutzschalters,
- FIG 10: ein Flussdiagramm, welches ein Verfahren zum Herstellen einer Schutzschaltung für einen Traktionsakkumulator gemäß einem Ausführungsbeispiel der Erfindung veranschaulicht.

In FIG 1 wird eine schematische Darstellung eines elektrisch angetriebenen Fahrzeugs 1, in diesem Fall eines herkömmlichen elektrifizierten Schienenfahrzeugs 1, mit einer Traktionsbatterie 10 veranschaulicht. Das elektrifizierte Schienenfahrzeug 1 umfasst zur Versorgung mit elektrischer Energie aus dem Wechselspannungsbahnstromnetz einen Pantographen 2, der über einen Leistungsschalter 3 mit einem Haupttransformator 4 elektrisch verbunden ist. Der Haupttransformator 4 transformiert die Hochspannung des Wechselspannungsbahnstromnetzes in eine niedrigere Wechselspannung, die anschließend über einen Vierquadrantensteller 5 in eine Zwischenkreis-Gleichspannung von etwa 2 bis 4 kV für einen Traktionszwischenkreis ZK umgewandelt wird. Von dem Traktionszwischenkreis ZK werden Traktionseinrichtungen 8, d.h. insbesondere Fahrmotoren, über Pulswechselrichter, insbesondere Antriebspulswechselrichter 7, mit Drehstrom versorgt. Weiterhin besteht auch eine Gleichstromverbindung über einen DC-DC-Steller 9 zwischen dem Traktionszwischenkreis ZK und der Traktionsbatterie 10. Der Traktionszwischenkreis ZK ist außerdem über einen Hilfsbetriebeumrichter (nicht gezeigt) mit einem Drehstrombordnetz (nicht gezeigt) elektrisch verbunden.

In FIG 2 ist eine schematische Darstellung einer herkömmlichen Stromversorgungsschaltung 30 mit Stromsicherungen F1.1, F1.2 als Einmalsicherungen dargestellt. Die Stromversorgungsschaltung 30 umfasst einen Traktionsakkumulator 10 mit einem Pluspol und einem Minuspol. An beiden Polen weist der Traktionsakkumulator 10 jeweils eine Einmalsicherung F1.1, F1.2 auf, die allerdings nach einem Überstrom bzw. einem Kurzschluss KS nicht mehr in ihren Ausgangszustand rückversetzbar ist und daher ausgetauscht werden muss. Teil der Stromversorgungsschaltung 30 ist auch ein mittig dargestellter Traktionszwischenkreis ZK mit einer Kapazität Czk und ein Antriebspulswechselrichter 7, der den Gleichstrom des Traktionszwischenkreises ZK in Dreiphasenstrom wandelt. Der Dreiphasenstrom (in FIG 2 symbolisiert mit einer "3") wird von einer Traktionseinrichtung, in diesem Fall ein elektrischer Motor 8, zur Traktion genutzt. Die Stromversorgungsschaltung 30 ist über die Schienen S mit Erde elektrisch verbunden. D.h., der Minuspol des Traktionsakkumulators 10 ist geerdet.

In FIG 3 ist eine schematische Darstellung einer Stromversorgungseinrichtung 40 gemäß einem Ausführungsbeispiel der Erfindung dargestellt. Die in FIG 3 dargestellte Stromversorgungseinrichtung 40 unterscheidet sich von der in FIG 3 dargestellten herkömmlichen Stromversorgungsschaltung 30 dahingehend, dass sie zusätzlich die erfindungsgemäße Schutzschaltung 40a mit einem Halbleiter-Schutzschalter SSCB aufweist. Die Schutzschaltung SSCB ist mit einer Einmalsicherung F1.1, **d.h.** einer der beiden Einmalsicherungen F1.1, F1.2 auf der Seite des Pluspols des Traktionsakkumulators 10 elektrisch verbunden (in FIG 3 auf der oberen Seite der Darstellung abgebildet). Der Schutzschalter SSCB reagiert auf einen Anstieg eines Kurzschlussstroms und verhindert dadurch sowohl einen zu starken elektrischen Strom als auch ein Durchbrennen der Einmalsicherung F1.1, so dass diese auch bei einem Kurzschluss intakt bleibt. Die Schutzschaltung 40a ist auf einem Lastromrichter LSR angeordnet. Der Laststromrichter umfasst weitere elektronische Komponenten, wie zum Beispiel den in FIG 3 dargestellten Traktionszwischenkreis ZK und den in FIG 3 gezeigten Antriebspulswechselrichter 7.

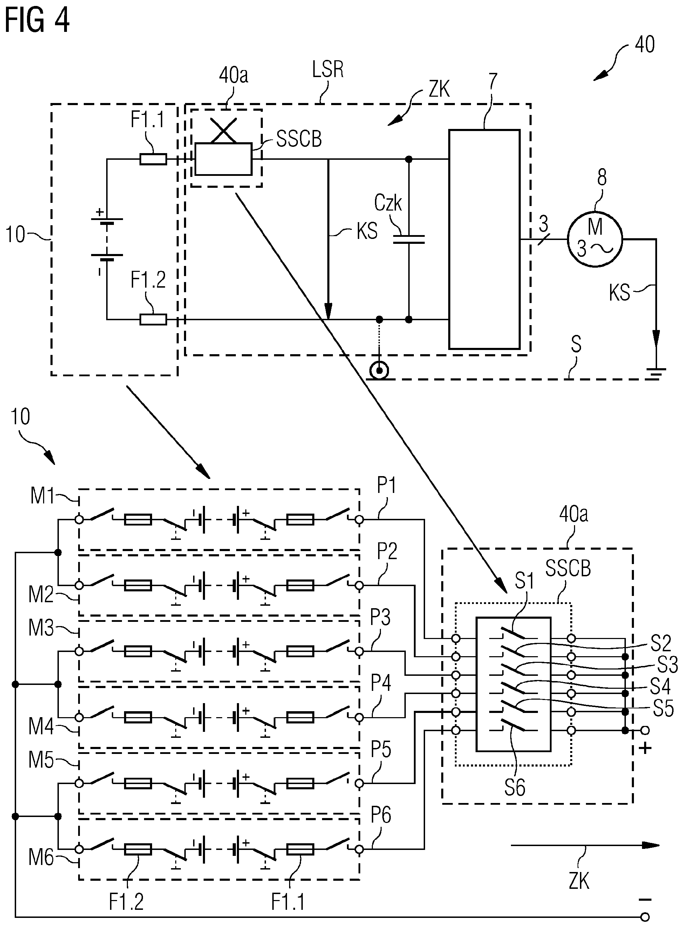

In FIG 4 ist neben der bereits aus der FIG 3 bekannten schematischen Darstellung einer Stromversorgungseinrichtung 40 gemäß einem Ausführungsbeispiel der Erfindung im unteren Abschnitt eine detaillierte Darstellung der Schutzschaltung 40a mit dem Halbleiter-Schutzschalter SSCB sowie dem Traktionsakkumulator 10 der in FIG 3 bereits gezeigten Stromversorgungseinrichtung 40 veranschaulicht.

Der Traktionsakkumulator 10 weist eine Mehrzahl von Modulen M1, ..., M6 auf, die zueinander parallelgeschaltet sind. Der halbleiterbasierte Schutzschalter SSCB der Schutzschaltung 40a weist eine Mehrzahl von Einzelschutzschaltern S1, S2, ..., S6 auf, die über einzelne Phasen P1, ..., P6 mit den Modulen M1, ..., M6 elektrisch verbunden sind und diesen jeweils zugeordnet sind. Jedes der einzelnen Module M1, ..., M6 des Traktionsakkumulators 10 kann also separat geschützt werden bzw. jede der einzelnen Phasen P1, ..., P6 kann einzeln unterbrochen werden. Kommt es zu einem Kurzschluss im Traktionszwischenkreis ZK, beispielsweise durch einen Erdkurzschluss im Motor 8, so schaltet jeder einzelne Einzelschutzschalter S1, S2, ..., S6 so schnell, dass die Kurzschlussströme noch nicht so schnell ansteigen und die Sicherungen in den Batteriezweigen nicht auslösen. Zusätzlich wird durch das sehr schnelle Abschalten die Höhe des Kurzschlussstroms gegenüber einer Anordnung nur mit einer Einmalsicherung F1.1, beispielsweise eine Schmelzsicherung, verringert. Nach Beheben der Fehlerstelle kann der Traktionsakkumulator 10 bzw. eines der Module M1, M2, ..., M6 durch den Schutzschalter SSCB bzw. einen der Einzelschalter S1, S2, ..., S6 wieder zugeschaltet werden. Es bildet sich eine kurzschlussfeste Stromversorgungsschaltung bzw. Stromversorgungseinrichtung 40 heraus, d.h. es darf beliebig oft ein Kurzschluss auftreten, ohne dass es zu einer Sicherungsauslösung oder einem Schaden am Traktionsakkumulator 10 kommt. Mithin kann der Schutzschalter SSCB selektiv einzelne Phasen abschalten, die von einem Defekt betroffen sind.

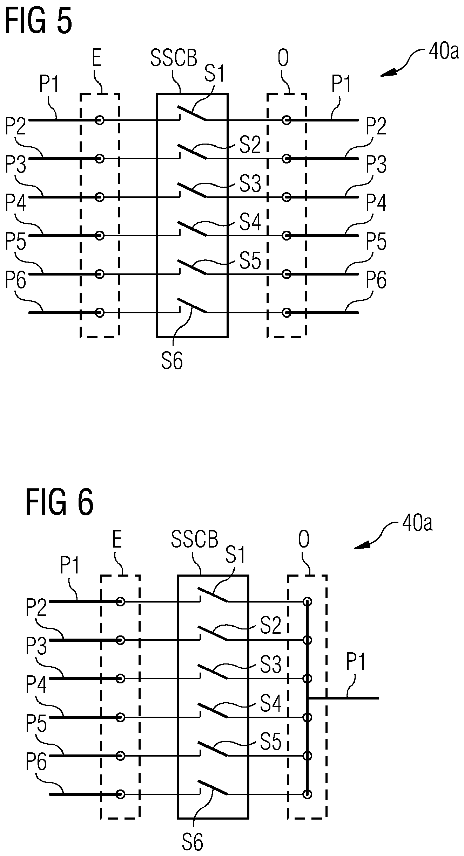

In FIG 5 ist eine schematische Darstellung einer Schutzschaltung 40a mit einer mehrphasigen Beschaltung eines Schutzschalters SSCB an seinem Eingang und seinem Ausgang gemäß einem Ausführungsbeispiel der Erfindung veranschaulicht. Bei der in FIG 5 gezeigten Beschaltung sind alle Einzelschalter S1, S2, ..., S6 unabhängig voneinander beschaltet. Die Anzahl der Anschlüsse des Eingangs E und die Anzahl der Anschlüsse des Ausgangs O des Schutzschalters SSCB entspricht der Anzahl der Einzelschalter S1, S2, ..., S6. Die einzelnen SSCB-Schalter S1, S2, ..., S6 können zum Beispiel unabhängigen Zwischenkreisen ZK und unterschiedlichen Lasten zugeordnet sein.

In FIG 6 ist eine schematische Darstellung einer Schutzschaltung 40a mit einem Schutzschalter SSCB mit einer mehrphasigen Beschaltung seines Eingangs E und einer einphasigen Beschaltung seines Ausgangs O gezeigt. Eine solche Beschaltung kann zum Beispiel für die in FIG 3 und FIG 4 dargestellte Stromversorgungseinrichtung 40 eingesetzt werden, wobei alle 6 Module M1, M2, ..., M6 des Traktionsakkumulators 10 auf einen einzigen Zwischenkreis ZK geschaltet werden. Selektives Abschalten einzelner Phasen bzw. einzelner Module M1, M2, ..., M6 ist hier möglich. Bei dieser Variante wird die Chipfläche des Schutzschalters SSCB bestmöglich ausgenutzt.

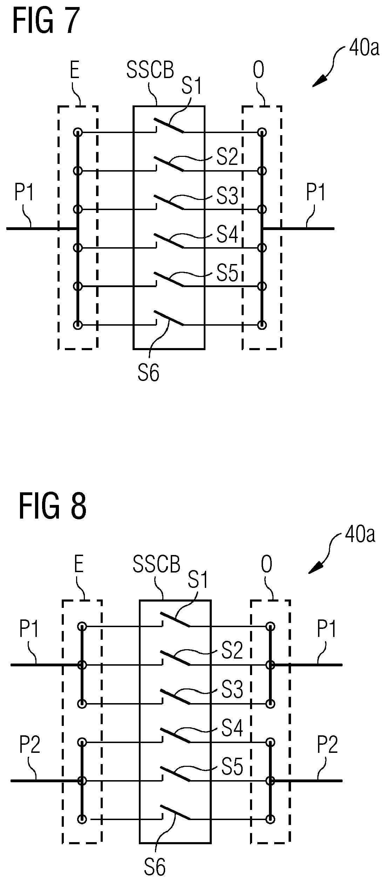

In FIG 7 ist eine schematische Darstellung einer Schutzschaltung 40a mit einem Schutzschalter SSCB mit einer einphasigen Beschaltung seines Eingangs E und einer einphasigen Beschaltung seines Ausgangs O dargestellt. Durch diese Beschaltung wird erreicht, dass die Wirkung der Mehrzahl von Einzelschaltern S1, S2, ..., S6 des Schutzschalters SSCB der Wirkung eines einzigen Einzelschalters mit einer hohen Stromkapazität entspricht.

In FIG 8 ist eine schematische Darstellung einer Schutzschaltung 40a mit einem Schutzschalter SSCB mit einer zweiphasigen Beschaltung seines Eingangs E und einer zweiphasigen Beschaltung seines Ausgangs O gezeigt. In der in FIG 8 gezeigten Konfiguration entspricht die Außenwirkung zwei unabhängigen parallelen "halbgroßen" Schaltern.

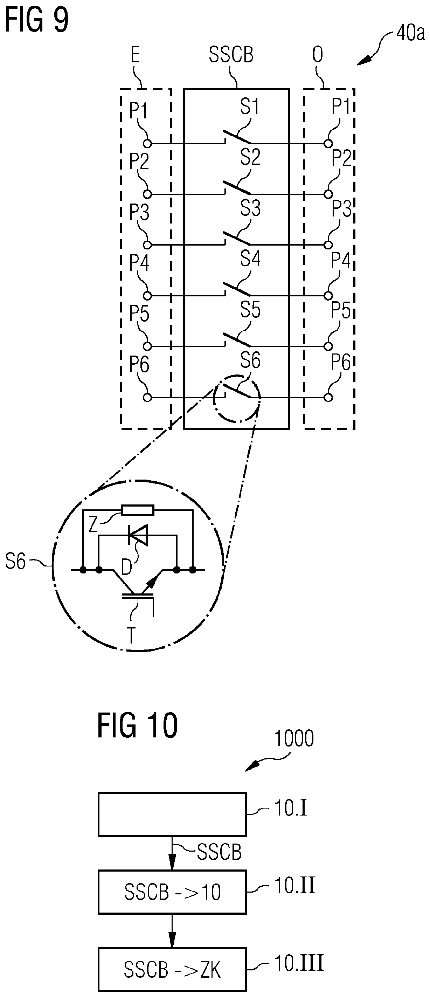

In FIG 9 ist eine Schutzschaltung 40a mit einem Schutzschalter SSCB mit der in FIG 5 gezeigten Beschaltung dargestellt, wobei einer der sechs parallelen Einzelschalter S1, S2, ..., S6, der sechste Einzelschalter S6, im Detail gezeigt ist. Jeder der sechs Einzelschalter S1, S2, ..., S6 umfasst einen Transistor T und eine parallel dazu geschaltete Invers-Diode D. Weiterhin umfasst jeder Einzelschalter eine Zusatz-Beschaltung Z. Die Zusatz-Beschaltung Z ist dazu eingerichtet, Spannungsspitzen zu begrenzen, und kann zum Beispiel durch einen sogenannten Snubber-Kondensator oder einen Varistor implementiert werden. Die Einzelschalter S1, S2, ..., S6 sind auf einem gemeinsamen Kühlkörper (nicht gezeigt) angeordnet. Weiterhin umfasst der Schutzschalter SSCB eine schnelle Strommesseinheit (nicht gezeigt) und eine Auswerte- und Ansteuerkomponente (nicht gezeigt). Die Kühlung des Schutzschalters SSCB erfolgt mittels einer Kühlplatte, auf der der Schutzschalter SSCB angeordnet ist. Um jede Phase einzeln abschalten zu können, wird der Strom jedes Einzelschalters S1, S2, ..., S6 ausgewertet und jeder Einzelschalter kann individuell angesteuert werden.

Die Anordnung ist schnittstellenkompatibel zum existierenden Stromrichterbaukasten. Ein solcher Stromrichterbaukasten umfasst Halbleitermodule mit identischen Abmaßen, wie der Schutzschalter SSCB und viele weitere Komponenten, aus denen beispielsweise ein Vierquadrantensteller oder Pulswechselrichter zusammengestellt werden kann, und Steuerungstechnik. Diese Komponenten bzw. Module werden dann gemeinsam in einem Stromrichterschrank als Teil eines Laststromrichters LSR eingebaut. Die Anordnung ist schnittstellenkompatibel mit den Abmessungen der Befestigungsmoduleinheit, der Kühlanschlüsse und der Steuerungsschnittstelle des Laststromrichters.

In FIG 10 ist ein Flussdiagramm 1000, welches ein Verfahren zum Herstellen einer Schutzschaltung für einen Traktionsakkumulator gemäß einem Ausführungsbeispiel der Erfindung veranschaulicht, gezeigt.

Bei dem Schritt 10.I des erfindungsgemäßen Verfahrens wird ein Halbleiter-Schutzschalter SSCB für einen Traktionsakkumulator 10, welcher in diesem Ausführungsbeispiel sechs Module M1, M2, ..., M6 aufweist, hergestellt. Der halbleiterbasierte Schutzschalter SSCB wird mit sechs parallel geschalteten Einzelschaltern S1, S2, ..., S6 und einem Eingang E und einem Ausgang O ausgebildet. Ein solcher Schutzschalter SSCB ist zum Beispiel in FIG 6 gezeigt.

Anschließend werden bei dem Schritt 10.II die Module des Traktionsakkumulators 10 pluspolseitig mit dem Eingang E des Halbleiter-Schutzschalters SSCB elektrisch verbunden. Hierbei werden die Einzelschalter S1, S2, **...,** S6 des Halbleiter-Schutzschalters SSCB jeweils mit den unterschiedlichen Modulen M1, M2, ..., M6 des Traktionsakkumulators 10 elektrisch verbunden.

Bei dem Schritt 10.III erfolgt eine Verbindung des Ausgangs O des Halbleiter-Schutzschalters SSCB mit einem Traktionszwischenkreis ZK, wobei bei dem in FIG 10 veranschaulichten Ausführungsbeispiel alle Einzelschalter S1, S2, ..., S6 auf einen einzigen Traktionszwischenkreis ZK zusammengeführt werden. Die so ausgebildete Schutzschaltung 40a entspricht der in FIG 6 veranschaulichten Schutzschaltung 40a.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

## Patentansprüche

1. Schutzschaltung (40a) für einen Traktionsakkumulator (10), welcher einen Pluspol und einen Minuspol umfasst, aufweisend einen mit dem Pluspol des Traktionsakkumulators (10) elektrisch verbundenen Halbleiter-Schutzschalter (SSCB),
wobei der Halbleiter-Schutzschalter (SSCB) einen Eingang (E) und einen Ausgang (O) umfasst und vorzugsweise der Eingang (E) des Halbleiter-Schutzschalters (SSCB) mit dem Pluspol des Traktionsakkumulators (10) elektrisch verbunden ist und der Halbleiter-Schutzschalter (SSCB) eine Mehrzahl von parallelen Einzelschaltern (S1, S2, **...,** S6) umfasst und die Einzelschalter (S1, S2, **...,** S6) auf einem gemeinsamen Kühlkörper angeordnet sind.

2. Schutzschaltungssystem, umfassend die Schutzschaltung nach Anspruch 1 und einen Traktionsakkumulator mit einer Mehrzahl von parallelen Modulen (M1, M2, **...,** M6), von denen mindestens zwei parallele Module im Eingang (E) und in Reihe mit unterschiedlichen Einzelschaltern (S1, S2, **...,** S6) des Halbleiter-Schutzschalters (SSCB) elektrisch verbunden sind.

3. Schutzschaltungssystem nach Anspruch 2, wobei jedes der parallelen Module (M1, M2, **...,** M6) im Eingang (E) und in Reihe mit einem unterschiedlichen Einzelschalter (S1, S2, **...,** S6) des Halbleiter-Schutzschalters (SSCB) elektrisch verbunden ist.

4. Schutzschaltung nach Anspruch 1, wobei der Ausgang (O) eine Mehrzahl von parallelen Anschlüssen (P1, P2, ..., P6) aufweist, die jeweils mit mindestens einem der parallelen Einzelschalter (S1, S2, **...,** S6) elektrisch verbunden sind.

5. Schutzschaltung nach Anspruch 4, wobei die Anzahl der parallelen Anschlüsse (P1, P2, ..., P6) kleiner als die Anzahl der parallelen Einzelschalter (S1, S2, **...,** S6) ist.

6. Schutzschaltung nach Anspruch 5, wobei der Ausgang (O) genau einen Anschluss (P1) aufweist, welche mit der Mehrzahl von parallelen Einzelschaltern (S1, S2, ..., S6) elektrisch verbunden ist.

7. Schutzschaltung nach einem der Ansprüche 1 bis 6, wobei der Eingang (E) eine Mehrzahl von parallelen Anschlüssen (P1, P2, ..., P6) aufweist und die Anzahl der Anschlüsse (P1, P2, ..., P6) des Eingangs (E) gleich der Anzahl der parallelen Einzelschalter (S1, S2, ..., S6) des Halbleiter-Schutzschalters (SSCB) ist.

8. Schutzschaltung nach einem der Ansprüche 1 bis 6, wobei der Eingang (E) eine Mehrzahl von parallelen Anschlüssen (P1, P2) aufweist und die Anzahl der Anschlüsse (P1, P2) des Eingangs (E) kleiner als die Anzahl der parallelen Einzelschalter (S1, S2, ..., S6) des Halbleiter-Schutzschalters (SSCB) ist.

9. Schutzschaltungssystem nach einem der Ansprüche 2 oder 3, wobei der Eingang (E) eine Mehrzahl von parallelen Anschlüssen (P1, P2, ..., P6) aufweist und die Anzahl der Anschlüsse (P1, P2, ..., P6) gleich der Anzahl der parallelen Module (M1, M2, ..., M6) des Traktionsakkumulators (10) ist.

10. Stromversorgungseinrichtung (40), aufweisend:
- einen Traktionsakkumulator (10) mit einem Pluspol und einem Minuspol,
- eine Schutzschaltung (40a) nach einem der vorstehenden Ansprüche 1 oder 4 bis 8 oder nach einem der Schutzschaltungssysteme nach einem der vorstehenden Ansprüche 2, 3 oder 9,
- einen gleichstrombasierten Traktionszwischenkreis (ZK), der mit dem Traktionsakkumulator (10) und der Schutzschaltung (10a) elektrisch verbunden ist,
- einen Antriebspulswechselrichter (7) zur Transformation des Gleichstroms des Traktionszwischenkreises (ZK) in dreiphasigen Wechselstrom zur Traktion.

11. Elektrisch angetriebenes Fahrzeug (1), aufweisend:
- eine Traktionseinrichtung (8),
- eine Stromversorgungseinrichtung (40) nach Anspruch 10 zur Energieversorgung der Traktionseinrichtung (8).

12. Verfahren zum Herstellen einer Schutzschaltung (40a) für einen Traktionsakkumulator (10) mit einem Pluspol und einem Minuspol, aufweisend die Schritte:
- Herstellen eines Halbleiter-Schutzschalters (SSCB) mit einem Eingang (E) und einem Ausgang (O),
- elektrisches Verbinden des Eingangs (E) des Halbleiter-Schutzschalters (SSCB) mit dem Pluspol des Traktionsakkumulators (10),
- Ausbilden des Halbleiter-Schutzschalters (SSCB) mit einer Mehrzahl von parallelen Einzelschaltern (S1, S2, **...,** S6), wobei die Einzelschalter (S1, S2, **...,** S6) auf einem gemeinsamen Kühlkörper angeordnet werden.

## Revendications

1. Circuit de protection (40a) pour un accumulateur de traction (10), lequel comprend un pôle positif et un pôle négatif, présentant un disjoncteur à semi-conducteurs (SSCB) connecté électriquement au pôle positif de l'accumulateur de traction (10),
dans lequel le disjoncteur à semi-conducteurs (SSCB) comprend une entrée (E) et une sortie (O), l'entrée (E) du disjoncteur à semi-conducteurs (SSCB) est de préférence connectée électriquement au pôle positif de l'accumulateur de traction (10), et le disjoncteur à semi-conducteurs (SSCB) comprend une pluralité de commutateurs individuels parallèles (S1, S2,..., S6) et les commutateurs individuels (S1, S2,..., S6) sont disposés sur un refroidisseur commun.

2. Système de circuit de protection, comprenant le circuit de protection selon la revendication 1 et un accumulateur de traction avec une pluralité de modules parallèles (M1, M2,..., M6), dont au moins deux modules parallèles sont connectés électriquement à l'entrée (E) et en série avec différents commutateurs individuels (S1, S2,..., S6) du disjoncteur à semi-conducteurs (SSCB).

3. Système de circuit de protection selon la revendication 2, dans lequel chacun des modules parallèles (M1, M2,..., M6) est connecté électriquement à l'entrée (E) et en série avec un commutateur individuel différent (S1, S2,..., S6) du disjoncteur à semi-conducteurs (SSCB).

4. Circuit de protection selon la revendication 1, dans lequel la sortie (O) présente une pluralité de bornes parallèles (P1, P2,..., P6) qui sont chacune connectées électriquement à au moins l'un des commutateurs individuels parallèles (S1, S2,..., S6).

5. Circuit de protection selon la revendication 4, dans lequel le nombre de bornes parallèles (P1, P2,..., P6) est inférieur au nombre de commutateurs individuels parallèles (S1, S2,..., S6).

6. Circuit de protection selon la revendication 5, dans lequel la sortie (O) présente exactement une borne (P1) qui est connectée électriquement à la pluralité de commutateurs individuels parallèles (S1, S2,..., S6).

7. Circuit de protection selon l'une des revendications 1 à 6, dans lequel l'entrée (E) présente une pluralité de bornes parallèles (P1, P2,..., P6) et le nombre de bornes (P1, P2,..., P6) de l'entrée (E) est égal au nombre de commutateurs individuels parallèles (S1, S2,..., S6) du disjoncteur à semi-conducteurs (SSCB).

8. Circuit de protection selon l'une des revendications 1 à 6, dans lequel l'entrée (E) présente une pluralité de bornes parallèles (P1, P2) et le nombre de bornes (P1, P2) de l'entrée (E) est inférieur au nombre de commutateurs individuels parallèles (S1, S2,..., S6) du disjoncteur à semi-conducteurs (SSCB).

9. Système de circuit de protection selon l'une des revendications 2 ou 3, dans lequel l'entrée (E) présente une pluralité de bornes parallèles (P1, P2,..., P6) et le nombre de bornes (P1, P2,..., P6) est égal au nombre de modules parallèles (M1, M2,..., M6) de l'accumulateur de traction (10).

10. Dispositif d'alimentation électrique (40), présentant :
- un accumulateur de traction (10) avec un pôle positif et un pôle négatif,
- un circuit de protection (40a) selon l'une des revendications 1 ou 4 à 8 précédentes, ou selon l'un des systèmes de circuits de protection selon l'une des revendications 2, 3 ou 9 précédentes,
- un circuit intermédiaire de traction (ZK) à courant continu, connecté électriquement à l'accumulateur de traction (10) et au circuit de protection (10a),
- un onduleur de pulsation d'entraînement (7) destiné à transformer le courant continu du circuit intermédiaire de traction (ZK) en courant alternatif triphasé pour la traction.

11. Véhicule à propulsion électrique (1), présentant :
- un dispositif de traction (8),
- un dispositif d'alimentation électrique (40) selon la revendication 10 pour l'alimentation en énergie du dispositif de traction (8).

12. Procédé de fabrication d'un circuit de protection (40a) pour un accumulateur de traction (10) avec un pôle positif et un pôle négatif, présentant les étapes suivantes :
- fabrication d'un disjoncteur à semi-conducteurs (SSCB) avec une entrée (E) et une sortie (O),
- connexion électrique de l'entrée (E) du disjoncteur à semi-conducteurs (SSCB) au pôle positif de l'accumulateur de traction (10),
- conception du disjoncteur à semi-conducteurs (SSCB) avec une pluralité de commutateurs individuels parallèles (S1, S2,..., S6), dans lequel les commutateurs individuels (S1, S2,..., S6) sont disposés sur un refroidisseur commun.

## Claims

1. Protective circuit (40a) for a traction storage battery (10) that comprises a positive pole and a negative pole, having a semiconductor circuit breaker (SSCB) that is electrically connected to the positive pole of the traction storage battery (10),
wherein the semiconductor circuit breaker (SSCB) comprises an input (E) and an output (O), and the input (E) of the semiconductor circuit breaker (SSCB) is preferably electrically connected to the positive pole of the traction storage battery (10) and the semiconductor circuit breaker (SSCB) comprises a plurality of parallel individual switches (S1, S2, ..., S6) and the individual switches (S1, S2, ..., S6) are arranged on a common heat sink.

2. Protective circuit system comprising the protective circuit according to Claim 1 and a traction storage battery having a plurality of parallel modules (M1, M2, ..., M6), at least two parallel modules of which are electrically connected in the input (E) and in series with different individual switches (S1, S2, ..., S6) of the semiconductor circuit breaker (SSCB).

3. Protective circuit system according to Claim 2, wherein each of the parallel modules (M1, M2, ..., M6) is electrically connected in the input (E) and in series with a different individual switch (S1, S2, ..., S6) of the semiconductor circuit breaker (SSCB).

4. Protective circuit according to Claim 1, wherein the output (O) has a plurality of parallel terminals (P1, P2, ..., P6) that are each electrically connected to at least one of the parallel individual switches (S1, S2, ..., S6).

5. Protective circuit according to Claim 4, wherein the number of parallel terminals (P1, P2, ..., P6) is lower than the number of parallel individual switches (S1, S2, ..., S6).

6. Protective circuit according to Claim 5, wherein the output (O) has exactly one terminal (P1) that is electrically connected to the plurality of parallel individual switches (S1, S2, ..., S6).

7. Protective circuit according to one of Claims 1 to 6, wherein the input (E) has a plurality of parallel terminals (P1, P2, ..., P6), and the number of terminals (P1, P2, ..., P6) of the input (E) is equal to the number of parallel individual switches (S1, S2, ..., S6) of the semiconductor circuit breaker (SSCB).

8. Protective circuit according to one of Claims 1 to 6, wherein the input (E) has a plurality of parallel terminals (P1, P2), and the number of terminals (P1, P2) of the input (E) is lower than the number of parallel individual switches (S1, S2, ..., S6) of the semiconductor circuit breaker (SSCB).

9. Protective circuit system according to either of Claims 2 and 3, wherein the input (E) has a plurality of parallel terminals (P1, P2, ..., P6), and the number of terminals (P1, P2, ..., P6) is equal to the number of parallel modules (M1, M2, ..., M6) of the traction storage battery (10).

10. Power supply device (40), having:
- a traction storage battery (10) having a positive pole and a negative pole,
- a protective circuit (40a) according to one of the preceding Claims 1 or 4 to 8 or according to one of the protective circuit systems according to one of the preceding Claims 2, 3 and 9,
- a DC-based traction intermediate circuit (ZK) that is electrically connected to the traction storage battery (10) and to the protective circuit (10a),
- a drive pulse-controlled inverter (7) for transformation of the DC current of the traction intermediate circuit (ZK) into a three-phase AC current for traction.

11. Electrically driven vehicle (1), having:
- a traction device (8),
- a power supply device (40) according to Claim 10 for supplying energy to the traction device (8).

12. Method for producing a protective circuit (40a) for a traction storage battery (10) having a positive pole and a negative pole, having the steps of:
- producing a semiconductor circuit breaker (SSCB) having an input (E) and an output (O),
- electrically connecting the input (E) of the semiconductor circuit breaker (SSCB) to the positive pole of the traction storage battery (10),
- forming the semiconductor circuit breaker (SSCB) with a plurality of parallel individual switches (S1, S2, ..., S6), wherein the individual switches (S1, S2, ..., S6) are arranged on a common heat sink.
